(19) Europäisches Patentamt

European Patent Office

Office européen des brevets

(11) **EP 1 715 679 A1**

(12) **DEMANDE DE BREVET EUROPEEN**

(43) Date de publication:
**25.10.2006 Bulletin 2006/43**

(51) Int Cl.:
*H04N 5/44* (2006.01)

(21) Numéro de dépôt: **06290624.3**

(22) Date de dépôt: **18.04.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **22.04.2005 FR 0504095**

(71) Demandeur: **STMICROELECTRONICS SA**
**92120 Montrouge (FR)**

(72) Inventeur: **Barnichon, Christophe**
**38360 Sassenage (FR)**

(74) Mandataire: **Verdure, Stéphane**
**Cabinet Plasseraud**
**52 rue de la Victoire**
**75440 Paris Cedex 09 (FR)**

(54) **Désentrelacement d'une séquence d'image animées**

(57) Un procédé de désentrelacement d'une séquence d'images animées d'un format entrelacé vers un format progressif, la séquence d'images animées étant composée de trames successives, comprenant, pour une pluralité de pixels de lignes manquantes d'une trame courante à compléter, une évaluation des valeurs de ces pixels selon un ordre cohérent spatialement. Ladite évaluation comprend, pour chaque pixel de la pluralité de pixels, une étape d'estimation d'une direction d'interpolation, une étape d'interpolation spatiale suivant la direction d'interpolation estimée. Selon l'invention, l'étape d'estimation comprend, pour au moins un pixel courant de la pluralité de pixels, une étape de calcul d'un score pour au moins deux directions, et une étape de sélection de la direction d'interpolation à partir des scores calculés et de la direction d'interpolation estimée pour un pixel distinct situé au voisinage du pixel courant. Une comparaison entre deux scores calculés est également prévue, et la direction verticale est sélectionnée comme direction d'interpolation si ladite comparaison montre que les scores comparés sont suffisamment proches l'un de l'autre.

FIG.4.

**Description**

La présente invention concerne d'une manière générale la conversion de format d'affichage vidéo. Elle concerne plus particulièrement un procédé de conversion, ainsi que le dispositif associé, du format entrelacé de trames d'une séquence d'images animées vers le format d'affichage progressif, autrement appelé le désentrelacement.

Le format usuellement utilisé en télévision est dit format « vidéo entrelacé », c'est-à-dire que le signal vidéo correspondant code une séquence d'images animées composée de trames (demi images) successives comprenant des trames ayant des lignes de pixels paires d'une image donnée entrelacées, c'est-à-dire alternées, avec des trames ayant seulement des lignes de pixels impaires d'une image suivante. Cette diminution par deux de la quantité d'informations à transmettre a lieu cependant au détriment de la qualité des images, et ceci est d'autant plus sensible lorsqu'il s'agit d'images animées. En effet, l'image que représente une première trame n'est pas tout à fait la même que celle représentée par la trame suivante, puisqu'elles sont séparées par un intervalle de temps et que les objets représentés sont animés d'un mouvement. La simple superposition de deux trames successives ne permet donc pas de reconstruire une image à partir d'une séquence d'images au format vidéo entrelacé. Cette simple superposition n'est possible que lorsque la séquence d'images est au format dit film (« movie » en anglais), pour lequel chaque image filmée a été décomposée sur deux trames lors de l'encodage vers le format entrelacé.

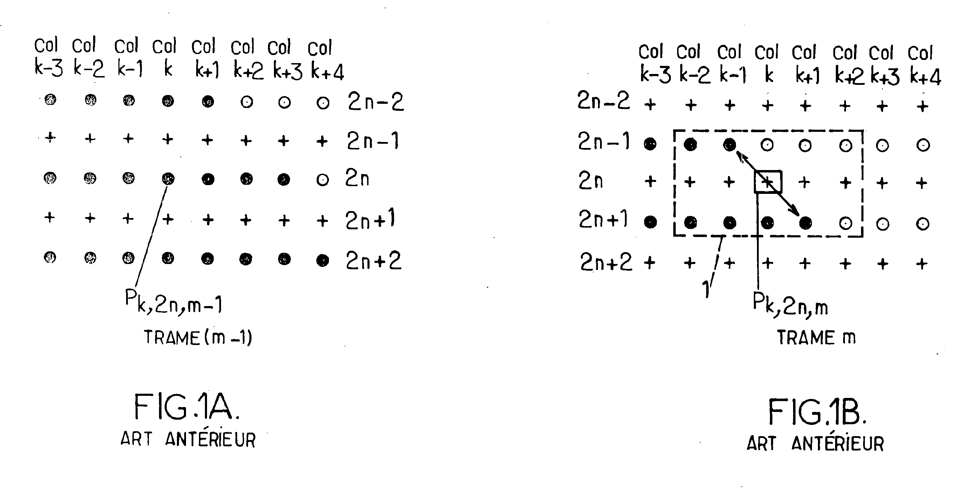

Les figures 1A et 1B représentent deux exemples de trames successives. Une trame (m-1) du premier type, représentée partiellement figure 1A, précède dans le temps une trame m du second type, représentée partiellement figure 1 B. La trame (m-1) d'un premier type et la trame m d'un second type sont respectivement associées à deux images successives.

Chaque trame comprend des colonnes, indicées par la lettre k, et des lignes, indicées par la lettre n. Chaque trame comprend seulement une moitié des pixels de l'image associée. La trame (m-1) du premier type, par exemple pair, comprend seulement des lignes de pixels d'un premier type, par exemple des lignes paires (lignes 2n), où n est un nombre entier. La trame m d'un second type, par exemple impair, comprend seulement des lignes de pixels d'un second type, par exemple des lignes impaires (lignes (2n+1)). Les lignes manquantes d'une trame paire sont les lignes impaires, et réciproquement. Les lignes présentes d'une trame paire sont les lignes paires, et réciproquement.

Il existe de nombreux procédés de conversion du format d'affichage « entrelacé » vers le format naturel dit « progressif » ou « séquentiel » où la totalité des lignes est codée pour chaque image. Cette conversion est connue sous le nom de désentrelacement. L'objectif visé est de reconstruire à partir d'une séquence d'images sources entrelacées une séquence d'images progressives de qualité visuelle aussi proche que possible de la séquence d'images sources avant entrelacement.

La conversion du format entrelacé vers le format progressif, nécessite d'interpoler les lignes manquantes pour chaque trame, c'est-à-dire les lignes paires pour les trames impaires et les lignes impaires pour les trames paires. La reconstruction des pixels des lignes manquantes doit permettre d'obtenir une séquence d'images de la meilleure qualité possible.

L'interpolation des lignes manquantes d'une trame donnée peut être effectuée à partir des lignes présentes de cette trame : on parlera d'interpolation spatiale. Par exemple, la valeur du pixel $P_{k,2n,m}$ situé à la colonne k et à la ligne 2n de la trame m représentée figure 1 B peut être calculée à partir des valeurs des pixels de la ligne du dessus (2n-1) et de la ligne du dessous (2n+1) dans la trame m.

L'interpolation peut également être temporelle, c'est-à-dire que les valeurs des pixels d'une trame précédente et/ou d'une trame suivante peuvent être utilisées pour évaluer les valeurs des pixels des lignes manquantes d'une trame donnée. Une interpolation purement temporelle est par exemple utilisée lorsque la séquence d'image est au format « movie ». Par exemple, la valeur du pixel $P_{k,2n,m}$ situé à la colonne k et à la ligne 2n de la trame m représentée figure 1 B peut être choisie égale à la valeur du pixel $P_{k,2n,m-1}$ situé à la colonne k et à la ligne 2n de la trame (m-1) représentée figure 1A.

Un procédé d'interpolation peut également comprendre une interpolation spatio-temporelle, c'est-à-dire que l'évaluation de la valeur d'un pixel d'une ligne manquante d'une trame donnée est effectuée à partir des valeurs des pixels de lignes présentes de la trame donnée, d'une part, et à partir des valeurs des pixels d'une trame précédente et/ou d'une trame suivante d'autre part. Parmi les procédés d'interpolation spatio-temporels, on peut citer à titre d'exemple le filtrage médian.

Les procédés d'interpolation peuvent également comprendre des procédés avec compensation de mouvement.

L'interpolation spatiale est largement utilisée, en particulier dans des procédés d'interpolation spatiale ou spatio-temporelle.

Un procédé d'interpolation spatiale relativement simple consiste à choisir comme valeur d'un pixel $P_{k,2n,m}$ d'une colonne k et d'une ligne 2n une moyenne des valeurs des pixels $P_{k,2n-1,m}$ et $P_{k,2n+1,m}$ appartenant à la même colonne k et aux lignes présentes (2n-1) et (2n+1) qui encadrent la ligne manquante 2n. L'interpolation est effectuée dans une direction verticale. Toutefois, lorsque l'image associée à la trame m représente des formes avec des contours diagonaux, une interpolation verticale risque de conduire à l'apparition de créneaux au niveau des contours diagonaux.

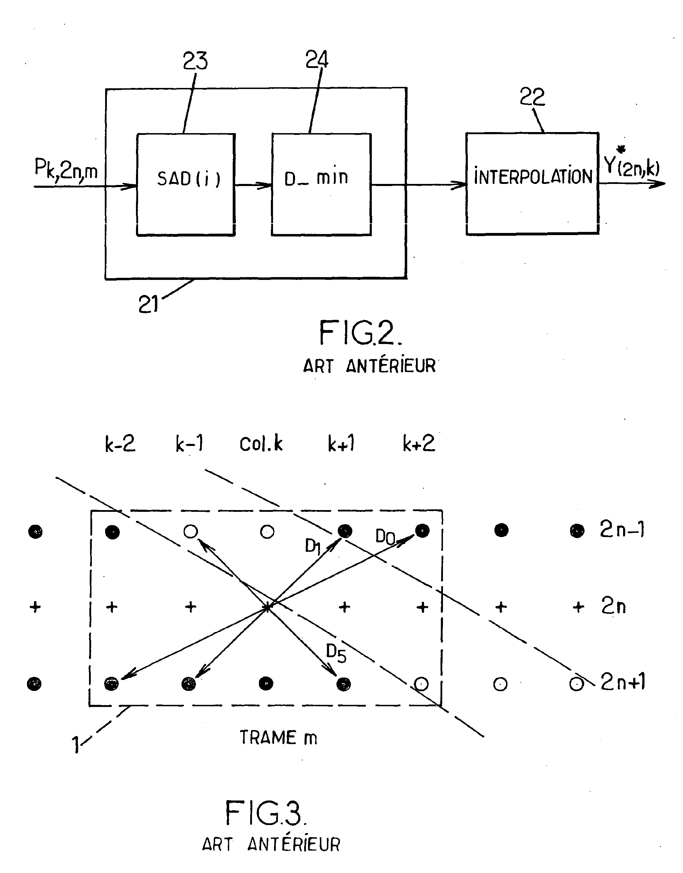

Afin de remédier à cet inconvénient, il est connu d'effectuer une interpolation diagonale. La figure 2 représente un exemple d'algorithme d'interpolation diagonale pour l'évaluation de la valeur d'un pixel donné $P_{k,2n,m}$ d'une ligne manquante 2n d'une trame m. Une direction d'interpolation est estimée (étape 21), classiquement en calculant un score pour chaque direction Di indicée par la lettre i d'un jeu de directions (étape 23) et en choisissant la direction D_min pour laquelle le score associé est le plus faible comme direction d'interpolation. L'algorithme comprend également une étape d'interpolation (étape 22) à partir des valeurs des pixels alignés suivant la direction d'interpolation pour évaluer la valeur $Y^*(2n,k)$ du pixel $P_{k,2n,m}$.

Le brevet européen EP 1 450 560 décrit un exemple d'algorithme de recherche de la meilleure direction. La recherche est effectuée au sein d'une fenêtre de dix pixels autour du pixel dont la valeur doit être évaluée. Cette fenêtre est référencée 1 sur la figure 1B. Sept directions sont considérées et indicées par la lettre i, où i varie entre 0 et 6 :

- une direction sensiblement à -63° relativement à une direction verticale, et dans le sens trigonométrique, pour laquelle i=0,
- une direction sensiblement à -45°, pour laquelle i=1,
- une direction sensiblement à -26°, pour laquelle i=2,
- la direction verticale, pour laquelle i=3,
- une direction sensiblement à 26°, pour laquelle i=4,
- une direction sensiblement à 45°, pour laquelle i=5, et
- une direction sensiblement à 63°, pour laquelle i=6.

Pour chaque direction considérée, il est calculé une somme pondérée des différences absolues des valeurs de pixels (« Sum of Absolute Differences » en anglais ou SAD).

Pour reprendre l'exemple de trame illustré par la figure 1 B, pour la direction verticale (soit pour i=3), la somme pondérée SAD(3) peut être calculée en utilisant la formule :

$$SAD(3) = 0.125*|Y(2n-1, k-1) - Y(2n+1, k-1)|$$
$$+ 0.75*|Y(2n-1, k) - Y(2n+1, k)|$$
$$+0.125*|Y(2n-1, k+1) - Y(2n+1, k+1)|,$$

où Y(2n, k) désigne la valeur du pixel $P_{k,2n,m}$.

Pour une direction à +45° dans le sens trigonométrique et relativement à la direction verticale, (soit i = 5), la somme pondérée SAD(5) peut être calculée en utilisant la formule :

$$SAD(5) = 0.3125*|Y(2n-1, k-2) - Y(2n+1, k)|$$
$$+ 0.375*|Y(2n-1, k-1) - Y(2n+1, k+1)|$$
$$+0.3125*|Y(2n-1, k) - Y(2n+1, k+2)|.$$

Pour une direction donnée, chaque différence est en fait effectuée entre deux pixels alignés suivant cette direction. En choisissant la somme pondérée la plus faible, parmi les sommes pondérées SAD(i) calculées, on peut estimer la direction pour laquelle les modifications de valeurs des pixels entre la ligne au-dessus et la ligne au-dessous sont minimales, c'est-à-dire la direction du contour au niveau de ce pixel.

Un tel algorithme peut par exemple être appliqué pour rechercher la direction d'interpolation correspondant au pixel $P_{k,2n,m}$ de la trame représentée figure 1 B. Dans un souci de simplification, on considère que les pixels représentés sur cette trame peuvent prendre seulement deux valeurs, correspondant par exemple à la couleur noire et à la couleur blanche. Cet algorithme conduit à sélectionner la direction à 45°, représentée par une double flèche sur la figure 1 B.

Une fois la direction d'interpolation ainsi estimée pour un pixel donné, la valeur de ce pixel peut être interpolée à l'aide des valeurs des pixels alignés suivant cette direction, ici les pixels $P_{k-1,2n-1,m}$ et $P_{k+1,2n+1,m}$. Dans cet exemple simplifié, la valeur évaluée du pixel $P_{k,2n,m}$ correspond à la couleur noire.

Toutefois, les algorithmes de recherche de la direction d'interpolation peuvent conduire à une indétermination ou à un résultat erroné, en particulier pour des images présentant des objets d'épaisseur relativement faible.

La figure 3 illustre un exemple de trame impaire associée à une image représentant un objet d'épaisseur relativement faible. L'épaisseur de l'objet, dont les contours sont représentés par des lignes en pointillés, est bien entendu relative au nombre de pixels.

L'algorithme décrit dans le brevet européen EP 1 450 560 conduit à sélectionner la direction $D_0$, associée à un angle de -63° environ relativement à la direction verticale des colonnes, comme direction d'interpolation correspondant au pixel $P_{k,2n,m}$. Les sommes pondérées SAD(1) et SAD(5) associées aux directions $D_1$ et $D_5$, respectivement -45° et +45° relativement à la direction verticale, sont également relativement faibles.

D'autres algorithmes connus de recherche de la direction d'interpolation peuvent également aboutir à un résultat erroné, ou encore à une indétermination entre des directions très différentes les unes des autres.

La présente invention vient améliorer la situation notamment en ce qu'elle permet de déterminer la direction d'interpolation avec une plus grande fiabilité.

La présente invention a pour objet un procédé de désentrelacement d'une séquence d'images animées d'un format entrelacé vers un format progressif, selon la revendication 1.

Par l'expression "ordre cohérent spatialement", on entend un ordre suivant lequel il existe a priori une certaine corrélation entre les valeurs de deux pixels consécutifs, compte tenu du contenu de l'image. Par voisinage du pixel courant, on entend les pixels adjacents à ce pixel où situés dans une fenêtre de pixels autour de ce pixel dont la taille est suffisamment petite pour qu'il puisse être considéré qu'il y a une certaine corrélation entre les valeurs de ces pixels. Cette définition peut se traduire différemment selon la nature des images.

La direction d'interpolation varie en effet relativement peu pour des pixels voisins. En utilisant la direction d'interpolation estimée pour un pixel distinct situé dans un voisinage du pixel courant, on peut éviter un choix erroné de la direction d'interpolation estimée.

Dans un mode de réalisation, l'évaluation des valeurs des pixels de la pluralité de pixels est réalisée ligne manquante par ligne manquante, et, au sein d'une ligne manquante donnée, de gauche à droite. Un tel mode de traitement est couramment utilisé en désentrelacement, de sorte que l'implémentation du procédé de l'invention peut être réalisée relativement facilement à partir d'algorithmes ou de programmes de désentrelacement existants. De plus, pour chaque pixel courant, le pixel distinct correspondant peut appartenir à la même ligne, et à une colonne adjacente à gauche de la colonne dudit pixel courant, c'est-à-dire que le pixel distinct est en fait le pixel traité immédiatement avant le pixel courant. L'algorithme correspondant au procédé de l'invention est ainsi relativement simple. Le procédé peut par exemple comprendre une étape de mémorisation de la direction d'interpolation estimée : la direction d'interpolation mémorisée peut ensuite être utilisée pour estimer la direction d'interpolation d'un autre pixel courant, par exemple le pixel traité immédiatement après.

La présente invention a également pour objet un dispositif de désentrelacement d'une séquence d'images animées d'un format entrelacé vers un format progressif, selon la revendication 9.

Des modes de réalisation de ce dispositif permettent de mettre en oeuvre des implémentations du procédé présenté plus haut. La direction d'interpolation estimée pour un ou plusieurs pixels situés dans le voisinage du pixel courant permet de faciliter la prise de décision quant à la direction d'interpolation du pixel courant.

D'autres particularités et avantages de la présente invention apparaîtront dans la description ci-après.

Les figures 1A et 1B, déjà commentées, représentent deux exemples de portions de trames successives.

La figure 2, également déjà commentée, représente un exemple d'algorithme d'évaluation de la valeur d'un pixel selon l'art antérieur.

La figure 3, également déjà commentée, représente un exemple de portion de trame et des directions d'interpolation obtenues avec un algorithme d'estimation de direction d'interpolation selon l'art antérieur.

La figure 4 montre un exemple de portion de trame et des directions d'interpolation obtenues avec un algorithme d'estimation de direction d'interpolation selon un mode de réalisation préféré de la présente invention.

La figure 5 représente un exemple d'algorithme simplifié d'évaluation de la valeur d'un pixel courant selon le mode de réalisation préféré de la présente invention.

La figure 6 représente un exemple détaillé d'algorithme d'évaluation des valeurs de pixels d'une ligne manquante selon le mode de réalisation préféré de la présente invention.

La figure 7 représente un exemple de dispositif selon un mode de réalisation de la présente invention.

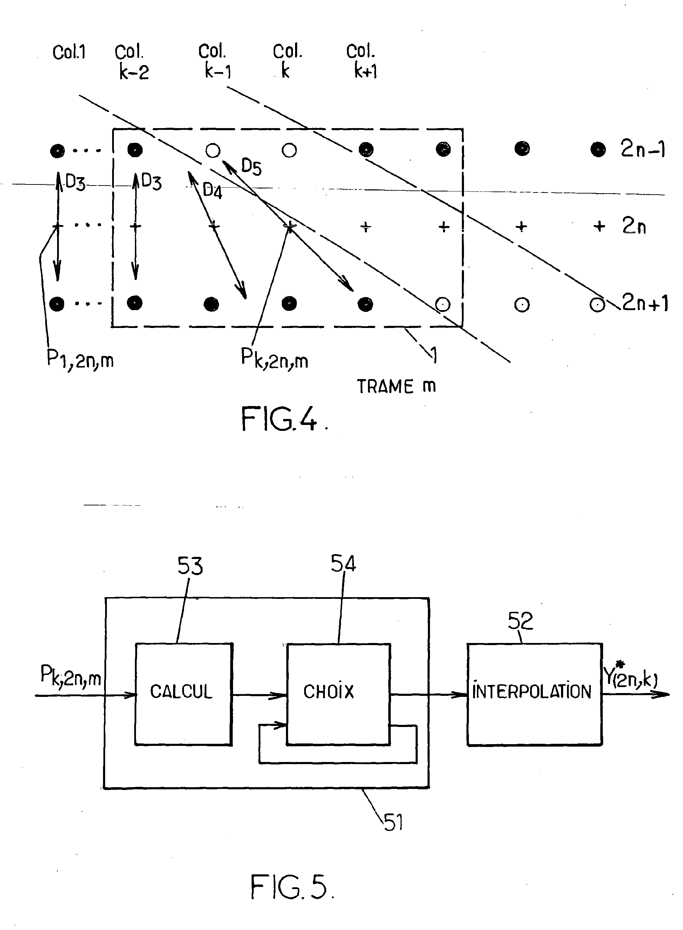

On se réfère tout d'abord à la figure 4, sur laquelle est représentée une portion de trame, associée à une image représentant un objet d'épaisseur relativement faible. L'épaisseur de l'objet, dont les contours sont représentés par des lignes en pointillés, est bien entendu relative au nombre de pixels.

Dans un souci de simplification, les pixels représentés sur cette trame peuvent prendre seulement deux valeurs, correspondant par exemple à la couleur noire et à la couleur blanche. En pratique, toutefois, des valeurs intermédiaires sont possibles.

La trame m représentée comprend des colonnes, indicées par la lettre k, et des lignes, indicées par la lettre n. La trame m représentée est une trame impaire.

Les valeurs de pixel d'une pluralité de pixels de lignes manquantes sont évaluées. Dans le mode de réalisation préféré, la pluralité de pixels comprend tous les pixels des lignes manquantes.

4

**Brève présentation de l'algorithme**

Dans le mode de réalisation préféré, l'évaluation des valeurs des pixels est réalisée selon un ordre correspondant par exemple à un ordre d'affichage, c'est-à-dire ligne manquante par ligne manquante en partant du haut, et au sein d'une ligne manquante donnée, de gauche à droite.

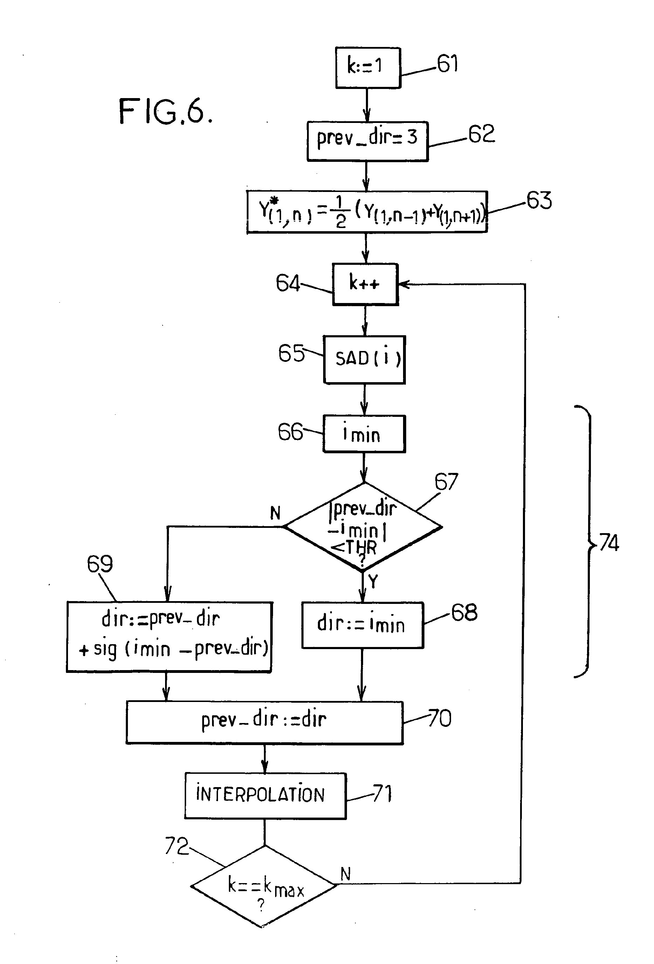

Chaque ligne manquante comprend un premier pixel $P_{1,2n,m}$ situé à l'extrémité gauche de la ligne manquante. La valeur de ce premier pixel $P_{1,2n,m}$ est évaluée selon un procédé d'interpolation verticale non représenté. Les autres pixels de chaque ligne manquante sont des pixels courants, pour lesquels le procédé représenté figure 5 peut être appliqué.

Pour chaque pixel courant $P_{k,2n,m}$, une direction d'interpolation est estimée (étape 51). L'estimation de la direction d'interpolation comprend une étape de calcul 53 d'un score pour au moins deux directions, ici pour chaque direction indicée par la lettre i d'un jeu de directions. Un procédé tel que celui décrit dans le document EP 1 450 560 peut être utilisé à cet effet. Le score est alors une somme pondérée de valeurs absolues de différences (SAD) de valeurs de pixels d'une fenêtre 1 autour du pixel courant $P_{k,2n,m}$. L'invention n'est bien entendu pas limitée par l'algorithme choisi pour effectuer l'étape de calcul 53.

L'estimation de la direction d'interpolation comprend également une étape de sélection 54 de ia direction d'interpolation pour le pixel courant, non seulement à partir des scores SAD(i) calculés, mais également à partir de la direction d'interpolation estimée pour un pixel distinct $P_{k-1,2n,m}$. Le pixel distinct est ici choisi parmi les pixels de la même ligne manquante que le pixel courant, et d'une colonne adjacente, à gauche. Ainsi, lorsque l'évaluation des valeurs des pixels est réalisée selon l'ordre défini plus haut, le pixel distinct est celui dont la valeur vient d'être évaluée.

Pour reprendre l'exemple illustré par la figure 4, et en admettant que l'estimation de la direction d'interpolation pour le pixel distinct $P_{k-1,2n,m}$ conduise à sélectionner la direction $D_4$, cette direction est prise en compte lors de la sélection de la direction d'interpolation pour le pixel courant $P_{k,2n,m}$. On a vu précédemment que l'algorithme de calcul décrit dans le document EP 1 450 560 conduisait, pour le pixel courant $P_{k,2n,m}$, à effectuer un choix parmi les directions $D_0$, $D_1$ et $D_5$. Le procédé selon la présente invention, en utilisant la direction d'interpolation estimée $D_4$ pour le pixel distinct $P_{k-1,2n,m}$, permet d'identifier de façon relativement fiable la direction $D_5$ comme étant la direction d'interpolation correcte. Les directions d'interpolation à l'approche d'un contour varient en effet de façon relativement continue puisque toute une fenêtre de pixels est prise en compte pour calculer les scores.

Pour revenir à la figure 5, une fois la direction d'interpolation estimée pour le pixel courant, la valeur $Y^*(2n,k)$ du pixel courant $P_{k,2n,m}$ est évaluée par interpolation spatiale dans la direction d'interpolation estimée (étape 52).

L'algorithme illustré par la figure 5 est, dans le mode de réalisation préféré, appliqué à tous les pixels d'une ligne manquante donnée à partir du second à gauche. Pour ce second pixel adjacent au premier pixel, la direction d'interpolation est également sélectionnée à partir des valeurs des scores calculées et de la direction d'interpolation estimée pour le premier pixel. La direction d'interpolation du premier pixel est considérée par défaut comme étant la direction verticale. Une étape d'initialisation de l'algorithme est ainsi relativement simple à mettre en oeuvre. De plus, une image comprend fréquemment des zones relativement unies. Les directions d'interpolation des pixels sur de telles zones sont pour ia plupart verticales.

**Présentation plus détaillée de l'algorithme**

La figure 6 représente un exemple détaillé d'algorithme d'évaluation des valeurs de pixels d'une ligne manquante selon le mode de réalisation préféré de la présente invention. On suppose dans cet exemple que l'entier n est pair.

Dans le mode de réalisation préféré, chaque pixel de la ligne manquante est traité de gauche à droite. L'indice k est tout d'abord initialisé (étape 61) afin de considérer le premier pixel $P_{1,n}$. La direction d'interpolation pour ce premier pixel est initialisée comme étant verticale, et une première variable **_prev_dir_** prend alors la valeur 3 indicative de la direction verticale (étape 62).

La valeur du premier pixel $P_{1,n}$ est estimée (étape 63) suivant une interpolation verticale, et ce, dans le mode de réalisation préféré, à partir de seulement deux pixels.

Les valeurs des autres pixels de la ligne manquante à traiter, dits pixels courants, sont alors évaluées. L'algorithme peut comprendre une boucle sur l'indice des colonnes k, avec des étapes classiques de test (étape 72) sur la valeur de l'indice k et d'incrémentation (étape 64) de la valeur de l'indice k.

Pour une valeur de l'indice k donnée, c'est-à-dire pour un pixel donné, un score est calculé sur un jeu de directions (étape 65) indicées par la lettre i. Ici, le score est une somme pondérée (SAD). Cette étape peut être mise en oeuvre par une boucle sur les directions du jeu de direction, non représentée sur la figure 6.

Le procédé comprend également une étape de sélection 74 de la direction d'interpolation, représentée de manière plus détaillée. Dans cet exemple, l'étape de sélection 74 comprend une étape de choix du score le plus faible parmi le jeu de scores calculés (étape 66). A ce score le plus faible correspond une direction provisoire D_min et un indice $i_{min}$. L'indice $i_{min}$ de la direction provisoire D_min est, dans le mode de réalisation préféré, comparée à la valeur de la première variable *prev_dir*. Plus exactement, la valeur absolue de la différence entre la valeur $i_{min}$ indiçant la direction provisoire et la première variable *prev_dir* est comparée à un seuil THR. La direction d'interpolation pour le pixel courant est déterminée selon un résultat de la comparaison (étape 68 ou 69).

Si la valeur $i_{min}$ indiçant la direction provisoire diffère trop de la valeur de la première variable *prev_dir*, la direction d'interpolation de ce pixel courant est estimée (étape 69) comme étant égale à la direction d'interpolation estimée pour le pixel distinct. Dans l'exemple illustré, une seconde variable *dir* indiquant la direction d'interpolation de ce pixel courant est estimée comme égale à la première variable *prev_dir* plus ou moins une unité selon le signe de la différence entre la valeur $i_{min}$ indiçant la direction provisoire et la première variable *prev_dir*.

Si entre la valeur $i_{min}$ indiçant la direction provisoire diffère relativement peu de la valeur de la première variable *prev_dir,* la direction d'interpolation de ce pixel courant est estimée (étape 68) comme égale à la direction provisoire.

Pour reprendre l'exemple de la trame représentée aux figures 3 et 4, lorsque l'étape 65 de calcul des scores est effectuée en utilisant l'algorithme décrit dans le document EP 1 450 560, l'étape de choix 66 du score le plus faible parmi le jeu de scores calculés conduit à choisir la direction $D_0$ comme direction provisoire, soit $i_{min}=0$.

On admettra que le procédé selon la présente invention conduit à estimer la direction d'interpolation du pixel distinct $P_{k-1,2n,m}$ comme étant la direction $D_4$, soit *prev_dir = 4.*

Le seuil peut par exemple avoir une valeur égale à 1.

La valeur absolue de la différence entre la valeur $i_{min}$ indiçant la direction provisoire et la première variable *prev_dir* est égale à 4. La seconde variable *dir* indiquant la direction d'interpolation sélectionnée est donc égale à 3, ce qui correspond à la direction verticale. Le procédé illustré figure 6 permet ainsi de limiter les erreurs d'estimation.

Selon un mode de réalisation alternatif, l'étape de choix 66 conduit à un jeu de directions provisoires comprenant éventuellement plusieurs directions provisoires. Chaque direction provisoire est ensuite comparée à la direction estimée afin de déterminer la direction provisoire la plus pertinente. Dans le cas de la trame représentée figures 3 et 4, et pour le pixel courant $P_{k,2n,m}$, ce mode de réalisation conduit à sélectionner la direction $D_5$ comme direction d'interpolation estimée.

La valeur de la seconde variable *dir* indiquant la direction d'interpolation estimée pour le pixel courant, peut être mémorisée (étape 70). La valeur de la seconde variable *dir* est en fait affectée à la première variable *pev_dir* en prévision de la prochaine exécution de la boucle indicée k.

La valeur du pixel courant est ensuite déterminée (étape 71) par interpolation spatiale suivant la direction d'interpolation.

L'étape de test 72 permet d'éviter une exécution de la boucle lorsque le dernier pixel courant de la ligne manquante a été traité. L'algorithme peut alors passer à la ligne manquante suivante, ou à la trame suivante.

Le procédé peut en outre comprendre quelques étapes supplémentaires, non représentées, pour affiner l'estimation de la direction d'interpolation pour le pixel courant.

Par exemple, le jeu de scores calculés lors de l'étape de calcul 65 peut être trié par ordre croissant pour identifier la valeur du score le plus faible et la valeur du score le plus élevé. Si la différence entre la valeur du score le plus faible et la valeur du score le plus élevé est inférieure à un second seuil, il peut être estimé que la zone correspondante de l'image est relativement unie, c'est-à-dire qu'elle présente peu de contours. En conséquence, la direction d'interpolation pour le pixel courant peut être alors estimée égale à la direction verticale.

La différence entre la valeur du score le plus faible et la valeur du score pour la direction verticale peut également être comparée à un troisième seuil. Si la valeur du score le plus faible est relativement proche de la valeur du score pour la direction verticale, la direction d'interpolation pour le pixel courant peut également être estimée égale à la direction verticale.

D'autres étapes supplémentaires, par exemple des étapes pour détecter des contours horizontaux, peuvent également être mises en oeuvre. Ces étapes supplémentaires permettent d'évaluer la valeur des pixels courants de façon plus satisfaisante encore.

**Dispositif de désentrelacement**

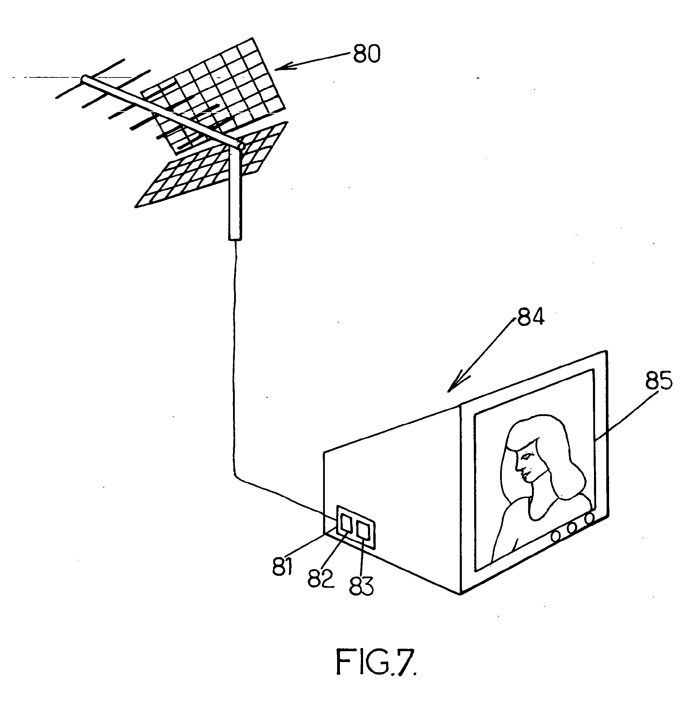

La figure 7 représente un exemple de dispositif selon un mode de réalisation de la présente invention. Le dispositif représenté comprend un poste de télévision 84 et un dispositif de réception de trames successives, comprenant par exemple une antenne hertzienne 80. Le dispositif de la présente invention peut être utilisé dans un poste de télévision, comme représenté à la figure 7, mais également dans d'autres appareils, par exemple dans un téléphone multimédia ("smartphone" en anglais).

Le poste de télévision 84 comprend un écran 85 et un dispositif d'évaluation 81.

Le dispositif d'évaluation 81, par exemple un circuit de commande, permet d'évaluer, selon un ordre cohérent spatialement, des valeurs de pixels courants de lignes manquantes d'une trame courante capturée.

Une première mémoire, par une mémoire RAM 82 permet de stocker au moins les valeurs de pixels d'une fenêtre autour d'un pixel courant. Un dispositif de calcul, par exemple un DSP 83, permet de calculer et de mémoriser un jeu de scores pour le pixel courant, chaque score correspondant à une direction. Le DSP 83 communique avec la RAM 82 de façon à pouvoir effectuer le calcul à partir des valeurs des pixels mémorisées.

Une seconde mémoire, ici confondue avec la première mémoire 82, permet de stocker une indication quant à une direction d'interpolation estimée pour un pixel distinct du pixel courant, par exemple un pixel préalablement traité situé dans un voisinage du pixel courant.

Un dispositif de sélection, ici confondu avec le dispositif de calcul 83, permet de choisir une direction d'interpolation pour le pixel courant à partir des scores calculés et de la direction d'interpolation estimée et stockée dans la seconde mémoire.

Un dispositif d'interpolation, ici confondu avec le avec le dispositif de calcul 83, permet d'interpoler spatialement la valeur du pixel courant dans la direction d'interpolation estimée.

**Variantes**

La présente invention n'est pas limitée par l'ordre selon lequel est effectuée l'évaluation des valeurs de pixels.

L'invention n'est pas non plus limitée par la position du pixel distinct relativement au pixel courant. Par exemple, le pixel distinct correspondant à un pixel courant donné peut appartenir à la même colonne, et à une ligne au-dessus dudit pixel courant. Le pixel distinct peut être un pixel d'une ligne manquante ou d'une ligne présente.

L'évaluation des valeurs des pixels s'applique au moins aux pixels de la pluralité de pixels. Comme décrit précédemment, l'étape d'estimation peut être réalisée de façon arbitraire pour certains pixels de la pluralité de pixels. La pluralité de pixels peut par exemple comprendre un premier pixel dont la direction d'interpolation estimée est la direction verticale, ou tout autre direction.

Les pixels des lignes manquantes peuvent ne pas appartenir en totalité à la pluralité de pixels. En particulier, le premier pixel d'une ligne manquante donnée peut ne pas appartenir à la pluralité de pixels. Par exemple, la valeur du premier pixel peut être évaluée par une interpolation temporelle et la direction d'interpolation du premier pixel estimée en utilisant la valeur évaluée par interpolation temporelle. Cette direction d'interpolation estimée peut par la suite être utilisée selon le procédé de la présente invention, par exemple pour évaluer la valeur d'un pixel courant adjacent au premier pixel.

Le terme « pixel courant » désigne un pixel dont la valeur est évaluée selon le procédé de la présente invention, avec une étape d'estimation comprenant une étape de sélection à partir de la direction d'interpolation estimée pour le pixel distinct. Le nombre de pixels courants peut être relativement limité. Par exemple, la direction d'interpolation estimée pour le pixel distinct correspondant à un pixel courant donné peut n'intervenir qu'en cas d'indétermination suite au calcul des scores pour le pixel courant. Dans ce cas, le nombre de pixels courants par trame dépend de la trame et peut être relativement faible, voire nul selon la trame.

L'étape de mémorisation de la direction d'interpolation estimée pour un pixel courant est facultative, en particulier lorsque les valeurs d'une partie des pixels des lignes manquantes de la trame courante sont évaluées suivant un procédé différent du procédé de la présente invention.

**Revendications**

1.  Procédé de désentrelacement d'une séquence d'images animées d'un format entrelacé vers un format progressif, la séquence d'images animées étant composée de trames successives, comprenant, pour une pluralité de pixels de lignes manquantes d'une trame courante à compléter, une évaluation des valeurs de ces pixels selon un ordre cohérent spatiaiement, ladite évaluation comprenant, pour chaque pixel de la pluralité de pixels

    - une étape d'estimation d'une direction d'interpolation (51),
    - une étape d'interpolation spatiale suivant la direction d'interpolation estimée (52),

    **caractérisé en ce que** l'étape d'estimation comprend, pour au moins un pixel courant de la pluralité de pixels

    - une étape de calcul d'un score pour au moins deux directions (53),
    - une étape de sélection (54) de la direction d'interpolation à partir des scores calculés et de la direction d'interpolation estimée pour un pixel distinct situé au voisinage du pixel courant, l'étape de sélection comprenant une sous-étape de comparaison de deux scores calculés entre eux, et dans lequel une direction d'interpolation verticale est sélectionnée si ladite comparaison montre que lesdits scores comparés sont suffisamment proches l'un de l'autre.

2.  Procédé de désentrelacement selon la revendication 1, dans lequel la sous-étape de comparaison de deux scores calculés comprend une comparaison du plus faible des scores calculés au plus élevé des scores calculés.

3. Procédé de désentrelacement selon la revendication 1, dans lequel la sous-étape de comparaison de deux scores calculés comprend une comparaison du plus faible des scores calculés à un score calculé correspondant à la direction verticale.

4. Procédé de désentrelacement selon l'une des revendications précédentes, dans lequel l'évaluation des valeurs des pixels de la pluralité de pixels est réalisée ligne manquante par ligne manquante, et au sein d'une ligne manquante donnée, de gauche à droite.

5. Procédé de désentrelacement selon la revendication 4, dans lequel, pour chaque pixel courant ($P_{k,n}$), le pixel distinct correspondant ($P_{k-1,n}$) appartient à la même ligne, et à une colonne adjacente à gauche de la colonne dudit pixel courant.

6. Procédé de désentrelacement selon la revendication 5, dans lequel :

- pour chaque ligne manquante comprenant des pixels de la pluralité de pixels, la pluralité de pixels comprend un premier pixel ($P_{1,n}$) situé à l'extrémité gauche de la ligne manquante, et
- pour chaque premier pixel, la direction d'interpolation estimée est verticale.

7. Procédé de désentrelacement suivant l'une des revendications précédentes, dans lequel l'étape de sélection de la direction d'interpolation (74) comprend

- une étape de choix d'une direction à partir des scores calculés (66),
- une étape de comparaison de la direction choisie à la direction d'interpolation estimée pour le pixel distinct (67), et
- une étape de détermination de la direction d'interpolation selon un résultat de la comparaison (68, 69).

8. Procédé de désentrelacement suivant l'une des revendications précédentes, comprenant en outre, pour chaque pixel de la pluralité de pixels :

- une étape de mémorisation (70) de la direction d'interpolation estimée pour ce pixel.

9. Dispositif de désentrelacement d'une séquence d'images animées d'un format entrelacé vers un format progressif, la séquence d'images animées étant composée de trames successives, ledit dispositif comprenant un dispositif d'évaluation (81) pour évaluer selon un ordre cohérent spatialement la valeur d'au moins un pixel courant appartenant à une ligne manquante d'une trame courante, comprenant,

• une première mémoire (82) pour stocker au moins les valeurs de pixels d'une fenêtre autour dudit pixel courant,
• un dispositif de calcul (83) pour calculer et mémoriser un score pour au moins deux directions pour ledit pixel courant à partir des valeurs des pixels mémorisées,
• une seconde mémoire (82) pour stocker une indication quant à une direction d'interpolation estimée pour un pixel distinct dudit pixel courant, le pixel distinct étant situé dans un voisinage dudit pixel courant,
• un dispositif de sélection (83) pour sélectionner une direction d'interpolation pour le pixel courant à partir des scores calculés et de la direction d'interpolation estimée stockée dans la seconde mémoire, le dispositif de sélection comprenant des moyens de comparaison pour comparer deux scores calculés entre eux, et le dispositif de sélection étant agencé pour sélectionner la direction verticale comme direction d'interpolation si ladite comparaison montre que lesdits scores comparés sont suffisamment proches l'un de l'autre, et
• un dispositif d'interpolation (83) pour interpoler spatialement la valeur du pixel courant dans la direction d'interpolation choisie.

10. Poste de télévision (84) comprenant
un écran (85), et
un circuit de commande (81) pour désentrelacer une séquence d'images animées d'un format entrelacé vers un format progressif, la séquence d'images animées étant composée de trames successives, ledit circuit de commande permettant d'évaluer selon un ordre cohérent spatialement la valeur d'au moins un pixel courant appartenant à une ligne manquante d'une trame courante, et comprenant,

• une première mémoire (82) pour stocker au moins les valeurs de pixels d'une fenêtre autour dudit pixel courant,
• un dispositif de calcul (83) pour calculer et mémoriser un score pour au moins deux directions pour ledit pixel courant à partir des valeurs des pixels mémorisées,
• une seconde mémoire (82) pour stocker une indication quant à une direction d'interpolation estimée pour un pixel distinct dudit pixel courant, le pixel distinct étant situé dans un voisinage dudit pixel courant,
• un dispositif de sélection (83) pour sélectionner une direction d'interpolation pour le pixel courant à partir des scores calculés et de la direction d'interpolation estimée stockée dans la seconde mémoire, le dispositif de sélection comprenant des moyens de comparaison pour comparer deux scores calculés entre eux, et le dispositif de sélection étant agencé pour sélectionner la direction verticale comme direction d'interpolation si ladite comparaison montre que lesdits scores comparés sont suffisamment proches l'un de l'autre, et
• un dispositif d'interpolation (83) pour interpoler spatialement la valeur du pixel courant dans la direction d'interpolation choisie.

EP 1 715 679 A1

Col Col Col Col Col Col Col Col
k-3 k-2 k-1 k k+1 k+2 k+3 k+4

2n-2

2n-1

2n

2n+1

2n+2

$P_{k,2n,m-1}$

TRAME (m-1)

## FIG.1A.
ART ANTÉRIEUR

Col Col Col Col Col Col Col Col
k-3 k-2 k-1 k k+1 k+2 k+3 k+4

2n-2

2n-1

2n

2n+1

2n+2

1

$P_{k,2n,m}$

TRAME m

## FIG.1B.
ART ANTÉRIEUR

23   24

22

Pk,2n,m → | SAD(i) | → | D_min | → | INTERPOLATION | → Y*(2n,k)

21

## FIG.2.
ART ANTÉRIEUR

k-2    k-1    Col.k    k+1    k+2

2n-1

+    +    +    +    +    +    + 2n

2n+1

1

TRAME m

## FIG.3.
ART ANTÉRIEUR

Col.1   Col.      Col.      Col.      Col.
        k-2       k-1       k          k+1

FIG.4.

P1,2n,m                Pk,2n,m

TRAME m

FIG.5.

Pk,2n,m   →   CALCUL   →   CHOIX   →   INTERPOLATION   →   Y*(2n,k)

53        54        52

51

# FIG.6.

FIG.7.

## RAPPORT DE RECHERCHE EUROPEENNE

**Office européen des brevets**

Numéro de la demande

EP 06 29 0624

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| P,X | WO 2005/072498 A (TECHWELL, INC; PARK, SEONG, H; MAH, JEREMY; KANEKURA, HIROSHI) 11 août 2005 (2005-08-11) * le document en entier * | 1-5,7-10 | INV. H04N5/44 |
| Y | US 5 886 745 A (MURAJI ET AL) 23 mars 1999 (1999-03-23) * colonne 3, ligne 3 - ligne 22 * * colonne 14, ligne 48 - colonne 21, ligne 12; figures 4-9 * * colonne 22, ligne 40 - ligne 46 * | 1-10 | |
| Y,D | EP 1 450 560 A (STMICROELECTRONICS S.A) 25 août 2004 (2004-08-25) * alinéas [0083], [0089] * | 1-10 | |
| A | EP 1 267 575 A (STMICROELECTRONICS S.R.L) 18 décembre 2002 (2002-12-18) * alinéas [0038], [0040], [0053], [0063], [0064], [0086], [0088], [0090], [0092] * | 1-10 | |

DOMAINES TECHNIQUES RECHERCHES (IPC)

H04N

Le présent rapport a été établi pour toutes les revendications

| Lieu de la recherche | Date d'achèvement de la recherche | Examinateur |
|---|---|---|
| La Haye | 22 juin 2006 | Yvonnet, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

  & : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 29 0624

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-06-2006

| Document brevet cité au rapport de recherche | | Date de publication | Membre(s) de la famille de brevet(s) | | Date de publication |
|---|---|---|---|---|---|
| WO 2005072498 | A | 11-08-2005 | US | 2005163401 A1 | 28-07-2005 |
| US 5886745 | A | 23-03-1999 | AUCUN | | |
| EP 1450560 | A | 25-08-2004 | FR | 2851398 A1 | 20-08-2004 |
| | | | US | 2004257467 A1 | 23-12-2004 |
| EP 1267575 | A | 18-12-2002 | US | 2003026498 A1 | 06-02-2003 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1450560 A